# DEMANDE DE BREVET EUROPEEN

(11) **EP 0 818 244 A1**
(43) Date de publication de la demande: **14.01.1998**
(21) Numéro de dépôt: 97401550.5
(22) Date de dépôt: 02.07.1997
(51) Int. Cl.: B05B 5/04

(54) **Turbine à suspension magnétofluidique**

(30) Priorité: 10.07.1996 FR 9608608
(71) Demandeur: SAMES S.A., F-38240 Meylan (FR)
(72) Inventeur: Delamare, Jérôme, 38000 Grenoble (FR)
(74) Mandataire: CABINET BONNET-THIRION

(57) **Abrégé**

Turbine à suspension magnétofluidique dans laquelle sont combinés un palier fluidique et un circuit magnétique comprenant un aimant dans le stator.

Selon l'invention, le circuit magnétique (35) comprend un aimant (45) dans le stator et un entrefer défini entre des pièces polaires (38, 40, 52) d'un circuit ferromagnétique agencé entre rotor et stator et ce circuit ferromagnétique comporte des éléments de centrage (62a, 62b, 63a, 63b) en regard de part et d'autre de l'entrefer.

## Description

L'invention se rapporte à une turbine à suspension magnétofluidique du type combinant un palier fluidique radial et un circuit magnétique propre à engendrer une force de rappel de recentrage dynamique lors d'un déplacement radial du rotor par rapport au stator. L'invention concerne plus particulièrement un perfectionnement dudit circuit magnétique. Une telle turbine est notamment utilisable pour entraîner un organe du pulvérisation de produit de revêtement, en forme générale de bol, à une vitesse de rotation élevée.

On connaît du document EP 0 567 436 une turbine du genre défini ci-dessus, comprenant un stator et un rotor, dans laquelle des moyens d'injection d'air sont prévus pour alimenter un espace laminaire défini entre deux surfaces planes en regard (perpendiculaires à l'axe de rotation théorique voulu du rotor) appartenant respectivement au rotor et au stator et formant un palier fluidique radial. Ce palier fluidique est équilibré par un circuit magnétique agencé pour partie dans ledit rotor et pour partie dans ledit stator et comprenant un entrefer radial défini sensiblement dans le même plan que l'espace laminaire du palier fluidique. Le circuit magnétique du dispositif connu est remarquable en ce qu'il comprend des aimants radialement à l'intérieur et des aimants radialement à l'extérieur dans le rotor et le stator, respectivement disposés symétriquement, par rapport au plan de l'entrefer, en regard l'un de l'autre.

Bien qu'un tel système donne satisfaction en fonctionnement, sa production industrielle se heurte à un certain nombre de difficultés nécessitant en particulier des réglages de mise au point délicats.

Parmi les difficultés rencontrées, on peut noter la non-homogénéité du champs d'induction, circonférentiellement, créé par un aimant annulaire. De ce fait, l'axe magnétique du rotor est rarement confondu avec son axe géométrique. Il peut en résulter un balourd lorsque le rotor tourne à grande vitesse; ce défaut est difficile à corriger. En outre, les aimants sont logés dans le rotor par collage. Il est par conséquent difficile de maîtriser le centrage magnétique des aimants et la valeur de l'entrefer, ce qui introduit des disparités d'une turbine à l'autre.

Pour toutes ces raisons, il peut être nécessaire d'apparier le rotor et le stator, ce qui peut poser ultérieurement des problèmes de maintenance s'il s'avère nécessaire de changer le rotor. Enfin, les aimants en terre rare supportent difficilement les efforts centrifuges engendrés aux vitesses de rotation élevées. Le risque d'éclatement d'un tel aimant oblige le constructeur à prévoir un montage particulier (frettage) autour des aimants, dans le rotor. L'invention permet d'éliminer tous ces inconvénients.

Plus précisément, l'invention concerne une turbine à suspension magnétofluidique, du type comprenant un stator, un rotor, un palier fluidique radial défini entre ledit rotor et ledit stator, des moyens d'injection de fluide étant prévus pour injecter ledit fluide dans un espace laminaire défini entre deux surfaces planes en regard appartenant respectivement audit rotor et audit stator, et un circuit magnétique agencé pour partie dans ledit rotor et pour partie dans ledit stator et comprenant un entrefer défini sensiblement dans le même plan que ledit espace laminaire, caractérisée en ce que ledit circuit magnétique comporte un aimant et un circuit ferromagnétique couplé audit aimant et présentant des éléments de centrage situés mutuellement en regard de part et d'autre dudit entrefer, pour canaliser le flux magnétique entre eux au travers dudit entrefer et engendrer une force de rappel lors d'un déplacement radial du rotor par rapport au stator.

Les deux surfaces planes précitées définissant ledit espace laminaire sont perpendiculaires à l'axe de rotation théorique et souhaité du rotor ; cet axe est confondu avec celui du stator, qui est aussi l'axe principal de la turbine.

Selon une caractéristique avantageuse de l'invention, la turbine comporte un seul aimant annulaire centré sur l'axe de rotation théorique du rotor et cet aimant est logé dans le stator; il n'est donc pas soumis aux efforts centrifuges. En outre, même si l'aimant permanent proprement dit présente des inhomogénéités comme mentionné ci-dessus, celles-ci disparaissent dans les pièces ferromagnétiques couplées à l'aimant. Le champs magnétique au niveau de l'entrefer est donc homogène et l'axe magnétique du système coïncide avec l'axe de rotation. L'aimant peut être du type électromagnétique.

Selon un mode de réalisation actuellement préféré, les éléments de centrage précités sont constitués par des nervures annulaires du circuit ferromagnétique, agencées coaxialement par paires et en vis-à-vis dans le rotor et le stator. De préférence, dans le rotor comme dans le stator, les nervures annulaires précitées sont définies radialement à l'intérieur et radialement à l'extérieur du palier fluidique. Celui-ci comporte, dans le stator, une pièce annulaire en matériau amagnétique entourée par des parties dudit circuit magnétique et dans laquelle est définie une chambre de distribution annulaire reliée à une source de fluide sous pression (de l'air comprimé) et communiquant avec ledit espace laminaire par une série de petits trous pratiqués le long d'un cercle centré sur l'axe de rotation théorique dudit rotor.

Enfin, il est important de noter que les faces en regard desdites nervures annulaires du rotor et du stator peuvent être usinées in situ, respectivement en retrait axial prédéterminé par rapport aux deux surfaces planes précitées délimitant ledit espace laminaire dudit palier fluidique. On peut ainsi ajuster très précisément la valeur de l'entrefer du circuit magnétique et sa position axiale par rapport audit espace laminaire du palier fluidique.

L'invention sera mieux comprise et d'autres avantages de celle-ci apparaîtront plus clairement à la lumière de la description qui va suivre d'une turbine à suspension magnétofluidique conforme à son principe, donnée uniquement à titre d'exemple et faite en référence aux dessins annexés dans lesquels :
- la figure 1 est une vue générale en coupe longitudinale d'une telle turbine ;
- la figure 2 est une vue de détail à plus grande échelle de l'encadré II de la figure 1.

En se reportant aux dessins, on a représenté une turbine à suspension magnétofluidique 11 dont le rotor 12 porte et entraîne en rotation un organe de pulvérisation centrifuge 13 en forme générale de coupelle ou bol, par l'intermédiaire d'une pièce intercalaire de montage 14, en matériau plastique, comme par exemple du polyamide. L'organe de pulvérisation 13 comporte un déflecteur central 15. Le produit de revêtement est injecté dans un perçage axial 16 et se répand, sous l'effet de la force centrifuge, dans l'espace défini entre la paroi interne de l'organe de pulvérisation et le déflecteur 15, jusqu'au bord de pulvérisation arrondi. Le déflecteur 15 comporte des petits conduits inclinés, au voisinage de son centre, débouchant sur sa face avant, pour le nettoyage de celle-ci à l'aide de solvant injecté à la place du produit de revêtement lors d'une phase de nettoyage de l'organe de pulvérisation, par exemple à l'occasion d'un changement de couleur.

La turbine proprement dite, se compose du rotor 12 et d'un stator 17. Ces deux sous-ensembles ont une configuration globalement annulaire. Le stator comporte de ce fait une large cavité centrale 18 abritant une roue à aubes 19 fixée par "clipsage" à la périphérie interne du rotor 12. Pour ce faire, la roue à aubes 19 est prolongée axialement par un manchon 20 muni de fentes 21 parallèles à sa direction axiale et lui conférant une certaine élasticité radiale. Ce manchon porte un bourrelet 23 à sa périphérie externe engagé dans une gorge 24 annulaire définie à la périphérie interne du rotor.

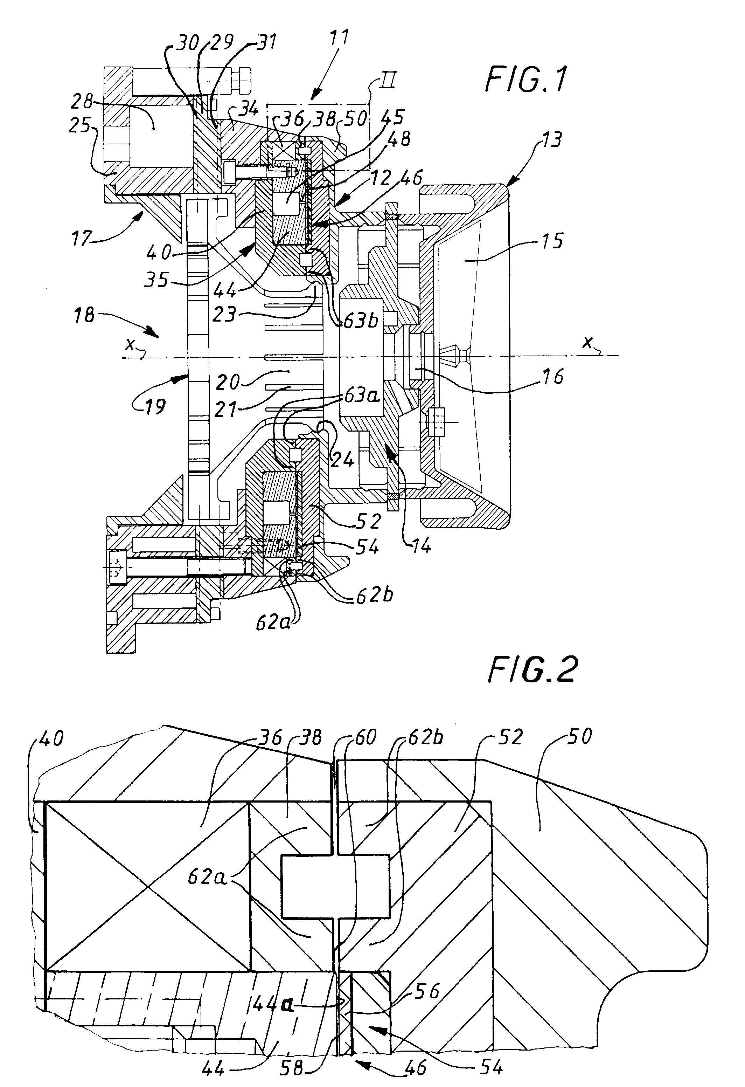

Le stator 17 comporte plusieurs pièces annulaires assemblées entre elles. Une première pièce 25 comporte notamment une chambre annulaire 28 connectée à une source de fluide sous pression, c'est-à-dire ici de l'air comprimé. Une seconde pièce annulaire 29, accolée à la première et fermant la chambre 28 comporte des injecteurs 30 en communication avec ladite chambre annulaire 28 pour diriger de l'air sur les pales de la roue à aubes et l'entraîner en rotation. D'autres injecteurs 31 sont pratiqués dans cette pièce annulaire pour diriger de l'air sur des encoches de freinage 32 de cette même roue à aubes. Les injecteurs 30 et 31 sont indiqués par des traits fantômes sur la figure 1.

La troisième pièce annulaire 34 accolée et fixée à la seconde sert de support à la partie statorique du système de suspension magnétofluidique. Cette troisième pièce porte donc une partie d'un circuit magnétique 35 comprenant un aimant 36 et deux pièces polaires 38, 40, annulaires, d'un circuit ferromagnétique (acier doux) et une partie d'un palier fluidique radial, à savoir une pièce en matériau amagnétique 44, annulaire, entourée par les éléments du circuit magnétique énoncés ci-dessus. Une chambre de distribution annulaire 45, reliée à une source de fluide sous pression (air comprimé) est définie dans la pièce 44 et fermée par la pièce polaire 40. Sa face extérieure avant 44a constitue une surface radiale plane appartenant à un palier fluidique radial 46. La chambre 45 alimente ce dernier par une série de petits trous 48 pratiqués le long d'un cercle centré sur l'axe de rotation théorique x-x du rotor. Cet axe se définit aussi comme étant l'axe principal de symétrie de la cavité 18 du stator dans laquelle est logée la roue à aubes. C'est l'axe de rotation effectif du rotor en régime stationnaire, c'est-à-dire lorsque celui-ci n'est soumis à aucun effort de recentrage.

Le rotor 12 comporte une pièce annulaire 50 en matériau amagnétique (aluminium) portant à la fois la roue à aubes 19 et la pièce intercalaire de montage 14. Elle sert aussi de support à la partie rotorique du système de suspension magnétofluidique. Plus précisément, elle abrite une troisième pièce polaire 52 du circuit ferromagnétique, laquelle comporte elle-même une creusure annulaire dans laquelle se loge une pièce annulaire plate 54 située en regard de la pièce en matériau amagnétique 44 du stator. La face en regard du stator est recouverte d'un revêtement de céramique 56 et forme l'autre surface plane du palier fluidique 46. En fonctionnement, les deux surfaces planes délimitent un espace laminaire 58 où l'air provenant de la chambre annulaire 45 est injecté en permanence pour maintenir le rotor à une distance axiale donnée du stator. Le circuit magnétique a tendance à s'opposer à l'existence de cet espace laminaire entre rotor et stator, en attirant le rotor vers le stator. Le revêtement de céramique permet d'éviter une détérioration du palier fluidique si la pression d'air disparaît lorsque le rotor est entraîné à grande vitesse.

Le circuit magnétique 35 tel que décrit ci-dessus comprend un entrefer 60 défini sensiblement dans le même plan que l'espace laminaire 58 et de part et d'autre de celui-ci. L'entrefer est défini entre la pièce polaire 38 du stator et la pièce polaire 52 du rotor, radialement à l'extérieur du palier fluidique et entre la pièce polaire 40 du stator et la pièce polaire 52 du rotor radialement à l'intérieur du palier fluidique. Les pièces polaires 38, 40 et 52 comportent des éléments de centrage situés mutuellement en regard et de part et d'autre de l'entrefer 60, pour canaliser le flux magnétique entre eux au travers dudit entrefer 60 et engendrer ainsi une force de rappel lors d'un déplacement radial du rotor par rapport au stator.

Il est à noter que, avec l'agencement qui vient d'être décrit, le circuit magnétique comporte avantageusement un seule aimant annulaire 36 centré sur l'axe de rotation théorique du rotor. Une éventuelle inhomogénéité magnétique de cet aimant est corrigée automatiquement par les pièces polaires en matériau ferromagnétique, au niveau de l'entrefer. De cette façon, l'axe magnétique du système est toujours confondu avec l'axe x-x. De plus, l'aimant 36 est logé dans le stator et n'est donc soumis à aucune force centrifuge. ll comporte deux faces polaires plates et parallèles respectivement en contact avec les pièces polaires annulaires 38, 40 du circuit ferromagnétique.

Les éléments de centrage mentionnés ci-dessus sont constitués par des nervures annulaires 62a, 62b, 63a, 63b du circuit ferromagnétique, agencées coaxialement par paires et en vis-à-vis dans le rotor et le stator. Plus précisément, on trouve des nervures 62a sur la pièce polaire 38 du stator, des nervures 63a sur la pièce polaire 40 du stator au voisinage de sa périphérie interne et des nervures 62b, 63b sur la pièce polaire 52 du rotor, au voisinage de sa périphérie externe et de sa périphérie interne, respectivement.

Ainsi, la première pièce polaire 38 accolée à l'un des pôles de l'aimant 36 est munie d'un premier groupe d'au moins deux nervures annulaires 62a situées radialement à l'extérieur du palier fluidique, tandis que la seconde pièce polaire 40 accolée à l'autre pôle de l'aimant est munie d'un second groupe d'au moins deux nervures annulaires 63a situées radialement à l'intérieur du palier fluidique. Dans le rotor 12, la troisième pièce polaire 52 est munie de deux groupes d'au moins deux nervures annulaires 62b, 63b respectivement situées radialement à l'extérieur et à l'intérieur du palier fluidique en regard des nervures desdits premier et second groupes de nervures du stator.

Comme on peut le remarquer sur la figure 2, l'entrefer magnétique 60 est plus important que l'espace laminaire 58 du palier fluidique. La valeur de cet entrefer peut être déterminée avec précision en usinant les faces en regard des nervures annulaires du rotor et du stator in-situ, respectivement en retrait prédéterminé par rapport aux deux surfaces planes 44a, 56, délimitant l'espace laminaire 58 du palier fluidique.

Le fait qu'il n'y ait qu'un seul aimant dans tout le circuit magnétique est avantageux. En effet, il devient possible de magnétiser de façon simple ledit aimant après son montage dans le stator, à la fin de la fabrication de celui-ci et notamment après usinage des faces des pièces polaires qui déterminent l'entrefer. On évite ainsi l'accumulation de minuscules particules ou copeaux de matériau ferromagnétique et le stator est facile à nettoyer pendant et après les opérations d'usinage. La magnétisation de l'aimant in situ peut ainsi être la dernière opération de la fabrication du stator; il suffit de le placer dans une bobine de magnétisation développant un champs d'orientation axiale.

Cette magnétisation in situ serait techniquement très difficile s'il y avait plusieurs aimants dans le stator et/ou le rotor, avec des sens de magnétisation opposés.

C'est pourquoi, dans ce type de turbine à plusieurs aimants, on préfère généralement magnétiser les aimants avant leur montage au risque que ceux-ci attirent et retiennent des particules ferromagnétiques pendant les opérations suivantes de fabrication.

En fonctionnement, le circuit magnétique développe une force d'attraction axiale entre rotor et stator qui équilibre la force de répulsion exercée par le palier fluidique, entre ces mêmes éléments. L'entrefer magnétique se stabilise à une valeur de l'ordre du dixième de millimètre tandis que ledit espace laminaire du palier fluidique a une largeur de l'ordre de 20 microns. Tout désaxage du rotor par rapport au stator engendre des forces de rappel entre les nervures annulaires en regard aboutissant à un recentrage rapide. Le fait que les nervures annulaires soient prévues de part et d'autre du palier fluidique 46 assure un meilleur équilibrage des forces de poussée (fluidiques) et de traction (magnétiques). Les forces magnétiques sont égalisées de part et d'autre du palier fluidique en prévoyant des nervures annulaires plus large à l'intérieur qu'à l'extérieur. De plus, la pièce polaire 52, en acier doux, logée dans le rotor permet de le rigidifier et de réduire les risques de déformation de celui-ci.

## Revendications

1. Turbine à suspension magnétofluidique, du type comprenant un stator (17), un rotor (12), un palier fluidique radial (46) défini entre ledit rotor et ledit stator, des moyens d'injection de fluide étant prévus pour injecter ledit fluide dans un espace laminaire défini entre deux surfaces planes en regard appartenant respectivement audit rotor et audit stator, et un circuit magnétique (35) agencé pour partie dans ledit rotor et pour partie dans ledit stator et comprenant un entrefer défini sensiblement dans le même plan que ledit espace laminaire, caractérisée en ce que ledit circuit magnétique comporte un aimant (36) et un circuit ferromagnétique (38, 40, 52) couplé audit aimant et présentant des éléments de centrage (62a, 62b, 63a, 63b) situés mutuellement en regard de part et d'autre dudit entrefer, pour canaliser le flux magnétique entre eux au travers dudit entrefer et engendrer une force de rappel lors d'un déplacement radial du rotor par rapport au stator.

2. Turbine selon la revendication 1, caractérisée en ce qu'elle comporte un seul aimant annulaire (36) centré sur l'axe de rotation théorique du rotor.

3. Turbine selon la revendication 2, caractérisée en ce que ledit aimant (36) est logé dans ledit stator (17).

4. Turbine selon la revendication 3, caractérisée en ce que ledit aimant comprend deux faces polaires plates et parallèles, en contact avec des pièces polaires (38, 40) dudit circuit ferromagnétique.

5. Turbine selon l'une des revendications précédentes, caractérisée en ce que les éléments de centrage sont constitués par des nervures annulaires (62a, 62b, 63a, 63b) dudit circuit ferromagnétique, agencées coaxialement par paires et en vis-à-vis, dans ledit rotor et ledit stator.

6. Turbine selon la revendication 5, caractérisée en ce que, dans ledit rotor comme dans ledit stator, les nervures annulaires précitées sont définies radialement à l'intérieur et radialement à l'extérieur dudit palier fluidique (46).

7. Turbine selon la revendication 6, caractérisée en ce que ledit palier fluidique comporte, dans ledit stator, une pièce annulaire (44) en matériau amagnétique entourée par des parties dudit circuit magnétique, dans laquelle est définie une chambre de distribution annulaire (45) reliée à une source de fluide sous pression et communiquant avec ledit espace laminaire par une série de petits trous (48) pratiqués le long d'un cercle centré sur ledit axe de rotation théorique dudit rotor.

8. Turbine selon la revendication 6 ou 7, caractérisée en ce que ledit circuit ferromagnétique comporte, d'une part, dans ledit stator, une première pièce polaire (38), annulaire, accolée à l'un des pôles dudit aimant et munie d'un premier groupe d'au moins deux nervures annulaires précitées situées radialement à l'extérieur dudit palier fluidique et une seconde pièce polaire (40), annulaire, accolée à l'autre pôle dudit aimant et munie d'un second groupe d'au moins deux nervures annulaires précitées situées radialement à l'intérieur dudit palier fluidique et, d'autre part, dans ledit rotor, une troisième pièce polaire (52) munie de deux groupes d'au moins deux nervures annulaires respectivement situées radialement à l'extérieur et à l'intérieur dudit palier fluidique (46) en regard des nervures desdits premier et second groupes dudit stator.

9. Turbine selon la revendication 8, caractérisée en ce que les faces en regard des nervures annulaires (62a, 62b, 63a, 63b) dudit rotor et dudit stator sont usinées in situ, respectivement en retrait axial prédéterminé par rapport aux deux surfaces planes précitées délimitant ledit espace laminaire (58) dudit palier fluidique.

10. Turbine selon l'une des revendications précédentes, caractérisée en ce que ledit rotor porte une roue à aubes (19) logée dans une cavité axiale dudit stator et en ce que ce dernier comporte des injecteurs d'air débouchant dans ladite cavité axiale en regard desdites aubes.

11. Turbine selon la revendication 10, caractérisée en ce que ladite roue à aubes comporte une partie centrale en forme de manchon munie de fentes s'étendant parallèlement à sa direction axiale, et comportant un bourrelet externe (23) engagé dans une gorge interne (24) dudit rotor.

12. Turbine selon l'une des revendications précédentes, caractérisée en ce que ledit rotor porte un organe de pulvérisation (13) de produit de revêtement.

13. Turbine selon l'une des revendications précédentes et la revendication 2, caractérisée en ce que ledit aimant est magnétisé in situ à la fin du processus d'élaboration dudit stator.
